Europäisches Patentamt

(19)　European Patent Office

Office européen des brevets

(11)　**EP 0 826 166 B1**

(12)　**EUROPÄISCHE PATENTSCHRIFT**

(45) Veröffentlichungstag und Bekanntmachung des Hinweises auf die Patenterteilung:
**03.11.1999   Patentblatt 1999/44**

(21) Anmeldenummer: **96914855.0**

(22) Anmeldetag: **10.05.1996**

(51) Int Cl.$^6$: **G05B 5/01**, G05B 13/02

(86) Internationale Anmeldenummer:
**PCT/DE96/00822**

(87) Internationale Veröffentlichungsnummer:
**WO 96/36909 (21.11.1996 Gazette 1996/51)**

(54) **VERFAHREN ZUR BESTIMMUNG EINER STÖRGRÖSSENAUFSCHALTUNG**

PROCESS FOR DETERMINING A FEEDFORWARD CONTROL

PROCEDE PERMETTANT DE DETERMINER UNE PRECOMPENSATION

(84) Benannte Vertragsstaaten:
**AT BE CH DE ES FR GB IT LI NL SE**

(30) Priorität: **17.05.1995   DE 19518113**

(43) Veröffentlichungstag der Anmeldung:
**04.03.1998   Patentblatt 1998/10**

(73) Patentinhaber: **SIEMENS AKTIENGESELLSCHAFT**
**80333 München (DE)**

(72) Erfinder:
 • **HÖHFELD, Markus**
   **D-81373 München (DE)**
 • **KIRCHBERG, Karl-Heinz**
   **D-76187 Karlsruhe (DE)**
 • **BORK, Peter**
   **D-76187 Karlsruhe (DE)**

(56) Entgegenhaltungen:
 • **PROCEEDINGS OF THE AMERICAN CONTROL CONFERENCE, PITTSBURGH, JUNE 21 - 23, 1989, Bd. 1, 21.Juni 1989, INSTITUTE OF ELECTRICAL AND ELECTRONICS ENGINEERS, Seiten 577-581, XP000088530 SCALI C ET AL: "ROBUSTNESS ISSUES IN FEEDFORWARD CONTROL"**
 • **JOURNAL A, Bd. 31, Nr. 2, 1.Juli 1990, Seiten 19-23, XP000140232 YONGHON TAN: "FEEDFORWARD CONTROL OF THE PROCESS WITH UNMEASURED DISTURBANCES"**
 • **PROCEEDINGS OF THE INTERNATIONAL JOINT CONFERENCE ON NEURAL NETWORK (IJCNN), NAGOYA, OCT. 25 - 29, 1993, Bd. 2 OF 3, 25.Oktober 1993, INSTITUTE OF ELECTRICAL AND ELECTRONICS ENGINEERS, Seiten 1841-1844, XP000499985 XIU Y M ET AL: "DISTURBANCE-REJECTION NEURAL NETWORK CONTROL"**

## Beschreibung

Die Erfindung betrifft ein Verfahren zur Bestimmung einer Störgrößenaufschaltung nach dem Oberbegriff des Anspruchs 1.

Aus dem Buch "Regelungstechnik" von Otto Föllinger, AEG-Telefunken, Berlin und Frankfurt (Main), 3. Auflage, 1979, Seite 201 ist eine Störgrößenaufschaltung auf einen Reglerausgang in einem geschlossenen Regelkreis bekannt. Dazu wird die Störgröße meßtechnisch erfaßt und über ein geeignetes Korrekturglied der Ausgangsgröße des Reglers überlagert. Greift die Störgröße ziemlich am Anfang einer Regelstrecke zwischen einem ersten Streckenanteil P1 und einem zweiten Streckenanteil P2 an, so dauert es bei dem Verzögerungsverhalten einer realen Strecke ohne eine derartige Störgrößenaufschaltung lange, bis der Regler von Störgrößenänderungen Notiz nimmt und sich darauf einstellen kann. Dieser Zustand wird durch die Störgrößenaufschaltung verbessert. Das Übertragungsverhalten des Korrekturglieds der Störgrößenaufschaltung entspricht im Laplace-Bereich der inversen Übertragungsfunktion des ersten Streckenanteils. Zur genauen Bestimmung des Korrekturglieds muß also ein exaktes Modell des ersten Streckenanteils vorhanden sein. Eine Identifikation des ersten Streckenanteils ist aber oftmals nur mit großem Aufwand möglich, da zusätzlich zur ohnehin vorhandenen Stellgröße auch eine interne Prozeßgröße, nämlich die Ausgangsgröße des ersten Streckenanteils P1, meßtechnisch erfaßt und ausgewertet werden muß.

Der Erfindung liegt die Aufgabe zugrunde, ein Verfahren zur Bestimmung der Störgrößenaufschaltung zu finden, bei dem keine zusätzliche interne Prozeßgröße erfaßt werden muß.

Zur Lösung dieser Aufgabe weist das neue Verfahren der eingangs genannten Art die im kennzeichnenden Teil des Anspruchs 1 genannten Merkmale auf. In den Unteransprüchen sind vorteilhafte Weiterbildungen der Erfindung angegeben.

Die Erfindung hat den Vorteil, daß zur Bestimmung einer Störgrößenaufschaltung lediglich die ohnehin in einem geschlossenen Regelkreis vorhandenen Größen verwendet werden müssen. Dadurch wird der Aufwand zur Festlegung eines Korrekturglieds für die Störgröße erheblich vermindert.

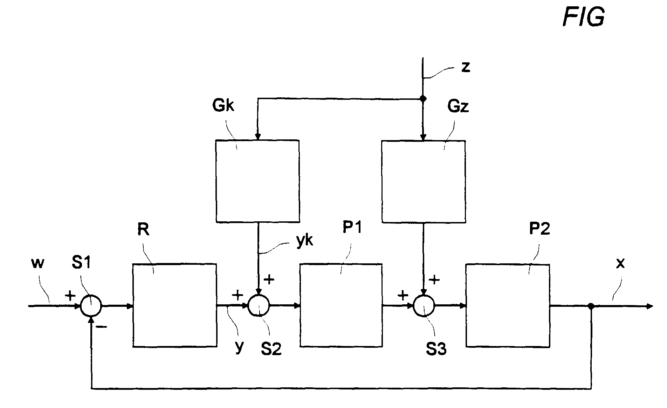

Anhand der Zeichnung, die ein Blockschaltbild eines geschlossenen Regelkreises mit Störgrößenaufschaltung darstellt, werden im folgenden die Erfindung sowie Ausgestaltungen und Vorteile näher erläutert.

Ein geschlossener Regelkreis besteht gemäß der Figur im wesentlichen aus einem Regler R, der eine Stellgröße y für einen Prozeß liefert, der hier in zwei Prozeßanteile P1 und P2 unterteilt ist. Eine Regelgröße x wird am Prozeß gemessen und mit negativem Vorzeichen auf ein Summierglied S1 geführt, das die Differenz aus einer Führungsgröße w und der Regelgröße x bildet, die als Regeldifferenz dem Regler R aufgeschaltet ist. Bei dem ersten Prozeßanteil P1 kann es sich beispielsweise um ein Ventil, bei dem zweiten Prozeßanteil P2 um einen chemischen Reaktor handeln. Eine meßbare Störgröße z, deren Übertragungsverhalten durch ein Übertragungsglied Gz beschrieben werden soll, wird mit einem Summierglied S3 additiv einer prozeßinternen Größe, beispielsweise dem bei einer Ventilstellung erhaltenen Durchfluß, überlagert. Sie greift damit am Eingang des zweiten Prozeßanteils P2 an. Dies ist der dynamisch ungünstigste Angriffspunkt, da die Störung hier erst den Prozeßanteil P2 durchlaufen muß, bevor sie sich auf die Regelgröße x auswirkt. Der Regler R kann damit immer nur verspätet auf Veränderungen der Störgröße z reagieren. Zur Störgrößenaufschaltung wird die gemessene Störgröße z zusätzlich mit einem Übertragungsglied Gk angepaßt und als Stellgrößenanteil yk der Stellgröße y des Reglers R in einem Summierglied S2 additiv überlagert.

Die folgenden Herleitungen werden im Laplace-Bereich durchgeführt. Es wird davon ausgegangen, daß die einzelnen Übertragungsglieder durch lineare Modelle beschrieben werden können.

Der Einfluß der Störgröße z(s) auf die Regelgröße x(s) kann berechnet werden zu:

$$x(s) = P2(s)*[Gz(s)*z(s) + P1(s)*(yk(s) + y(s))] \tag{1}$$

$$x(s) = P2(s)*[Gz(s)*z(s) + P1(s)*(Gk(s)*z(s) + y(s))] \tag{2}$$

$$x(s) = P1(s)*P2(s)*y(s) + P2(s)*[Gz(s) + P1(s)*Gk(s)]*z(s) \tag{3}$$

Er wird genau dann kompensiert, wenn gilt:

$$Gz(s) + P1(s)*Gk(s) = 0 \rightarrow Gk(s) = -\frac{Gz(s)}{P1(s)} \tag{4}$$

Eine meßbare Störgröße z muß also über ein Übertragungsglied Gk nach Gleichung [4] dem Reglerausgang aufgeschaltet werden, damit der Einfluß der Störgröße z auf die Regelgröße x gerade kompensiert wird. Für eine Übertragungsfunktion Gz(s) = -1 entspricht diese Formel dem aus dem Buch von Föllinger bekannten Stand der Technik, das bereits in der Beschreibungseinleitung genannt wurde. Diese Formel kann nur zur Bestimmung der Störgrößenaufschaltung Gk(s) benutzt werden, wenn Gz(s) und PI(s) bekannt sind. Wie bereits eingangs erwähnt, ist die Bestimmung dieser Übertragungsfunktionen normalerweise nicht direkt möglich, weil die Ausgangsgrößen der Übertragungsglieder Gz und P1 nicht oder nur mit großem Aufwand gemessen werden können. Erfindungsgemäß wird daher ein anderer Weg zur Bestimmung der Störgrößenaufschaltung Gk beschritten, und es wird zunächst der Einfluß der Störgröße z auf die Stellgröße y bestimmt, ohne dabei die zusätzliche Störgrößenaufschaltung Gk zu berücksichtigen.

$$y(s) = R(s)^* (w(s) - x(s)) \qquad [5]$$

$$y(s) = R(s)^* w(s) - R(s)^* P2(s)^* [Gz(s)^* z(s) + P1(s)^* y(s)] \qquad [6]$$

$$y(s)^* [1 + R(s)^* P1(s)^* P2(s)] = R(s)^* w(s) - R(s)^* P2(s)^* Gz(s)^* z(s) \qquad [7]$$

Betrachtet man nur den Einfluß der Störgröße z und vernachlässigt die Führungsgröße w, so kann Gleichung [7] umgeformt werden zu:

$$y(s) = - \frac{R(s)^* P2(s)}{1 + R(s)^* P1(s)^* P2(s)} * Gz(s)^* z(s) \qquad [8]$$

Durch Erweitern von Zähler und Nenner mit PI(s) wird daraus:

$$y(s) = - \frac{R(s)^* P1(s)^* P2(s)}{1 + R(s)^* P1(s)^* P2(s)} * \frac{Gz(s)}{P1(s)} * z(s) \qquad [9]$$

In Gleichung [9] entspricht die Kombination von negativem Vorzeichen mit dem zweiten Quotienten der gesuchten Störgrößenaufschaltung Gk:

$$y(s) = \frac{R(s)^* P1(s)^* P2(s)}{1 + R(s)^* P1(s)^* P2(s)} * Gk(s)^* z(s) \qquad [10]$$

Zur Verkürzung der Schreibweise wird die Reaktion der Stellgröße y, d. h. des Reglers R, auf die Störgröße z durch ein Modell Gid(s) beschrieben:

$$\frac{y(s)}{z(s)} = \frac{R(s)^* P1(s)^* P2(s)}{1 + R(s)^* P1(s)^* P2(s)} * Gk(s) = Gid(s) \qquad [11]$$

Will man eine Störgrößenaufschaltung entwerfen, so benötigt man zusätzlich das Führungsübertragungsverhalten:

$$Fw(s) = \frac{x(s)}{w(s)} = \frac{R(s)^* P1(s)^* P2(s)}{1 + R(s)^* P1(s)^* P2(s)} \qquad [12]$$

Identifiziert man die Übertragungsfunktion des geschlossenen Regelkreises Fw(s), d. h. die Reaktion der Regelgröße x auf eine Änderung der Führungsgröße w, so erhält man für die gesuchte Störgrößenaufschaltung Gk folgende Bestimmungsgleichung:

$$Gk(s) = \frac{Gid(s)}{Fw(s)} \qquad [13]$$

Es ist somit möglich, die Störgrößenaufschaltung Gk ohne explizite Kenntnis des Übertragungsverhaltens Gz der Störgröße z und des ersten Prozeßanteils P1 zu bestimmen.
Das prinzipielle Vorgehen zur Berechnung von Gk(s) soll anhand folgendem, idealisierten Beispiel erläutert werden. Die drei Modelle sollen durch folgende Übertragungsfunktionen beschrieben werden:

$$Fw(s)= \frac{1}{1+f1^*s+f2^*s^2 +...} \qquad [14]$$

$$Gid(s)= \frac{Kg}{1+g1^*s+g2^*s^2 +...} \qquad [15]$$

$$Gk(s)= \frac{Kk}{1+k1^*s+k2^*s^2 +...} \qquad [16]$$

Einsetzen in die Bestimmungsgleichung:

$$Gk(s)=\frac{Gid(s)}{Fw(s)} \qquad [17]$$

$$\frac{Kk}{(1+k1^*s+k2^*s^2 +...)} = \frac{Kg}{(1+g1^*s+g2^*s^2 +...)} {}_*\frac{(1+f1^*s+f2^*s^2 +...)}{1}$$

Hochmultiplizieren der Nenner:

$$Kk^*(1+g1^*s+g2^*s^2 +...)=Kg^*(1+f1^*s+f2^*s^2 +...)^*(1+k1^*s+k2^*s^2 +...)$$

Durch Koeffizientenvergleich erhält man daraus:

$$Kk=Kg \qquad (\rightarrow \text{ Wert für die statische Störgrößenaufschaltung})$$

$$g1=f1+k1 \qquad \rightarrow k1=g1\text{-}f1$$

$$g2=f1^*k1+f2+k2 \qquad \rightarrow k2=g2\text{-}f2\text{-}f1^*k1$$

usw.

Auf diese Weise kann man die einzelnen Koeffizienten der Störgrößenaufschaltung Gk(s) direkt bestimmen.

Es soll nun überprüft werden, inwieweit schon das Modell Gid(s) der gesuchten Störgrößenaufschaltung Gk(s) entspricht. Dazu wird Gleichung [11] nach dem Modell Gk(s) aufgelöst. Die gesuchte Störgrößenaufschaltung lautet dann:

$$Gk(s)=Gid(s)^*\frac{1+R(s)^*P1(s)^*P2(s)}{R(s)^*P1(s)^*P2(s)} \qquad [18]$$

$$Gk(s)=Gid(s)^*(1+\frac{1}{R(s)^*P1(s)^*P2(s)}) \qquad [19]$$

Das Modell Gid(s) entspricht somit in erster Näherung der gesuchten Störgrößenaufschaltung Gk(s). Die Näherung ist dabei um so besser, je kleiner der Quotient in dem Klammerausdruck der Gleichung [19] ist. Der Regler R muß dazu das Übertragungsverhalten P1(s)*P2(s) des Prozesses kompensieren. Dies wird um so schwieriger, je höher die Modellordnung der Übertragungsfunktion des Prozesses ist. Enthält der Prozeß eine Totzeit, so ist keine direkte Kompensation mehr möglich.

Ein Entwurfsverfahren, das der gewünschten Reglereinstellung sehr nahe kommt, ist der Reglerentwurf nach dem Betragsoptimum. Beim Betragsoptimum wird der Betrag des Führungsfrequenzganges auf den Wert 1 normiert:

$$|Fw(jw)|=\left|\frac{R(jw)^* P1(jw)^* P2(jw)}{1+R(jw)^* P1(jw)^* P2(jw)}\right|\approx 1 \qquad [20]$$

Dies entspricht der Bedingung:

$$\left|\frac{1}{R(jw)^* P1(jw)^* P2(jw)}\right|\approx 0 \qquad [21]$$

Läßt sich der Regler ideal nach dem Betragsoptimum entwerfen, so ist die ermittelte Übertragungsfunktion Gid(s) gleich der gesuchten Störgrößenaufschaltung Gk(s). Allerdings sind mit dem Betragsoptimum bei Strecken mit Totzeit, ohne Ausgleich oder bei schwingungsfähigen Strecken nur Näherungslösungen möglich.
In vielen Fällen genügt es, eine statische Störgrößenaufschaltung zu entwerfen. Dazu muß lediglich die Reaktion der Stellgröße y auf Änderungen der Störgröße z ohne Berücksichtigung der Stellgrößenaufschaltung ermittelt und die Übertragungsfunktion Gk(s) gleich dem ermittelten Verstärkungsfaktor von Gid(s) gesetzt werden. Ein Störgrößenwert wird damit unmittelbar in eine entsprechende Stellgröße umgesetzt. Die Wirkung der Störgröße z wird nicht mehr mathematisch exakt kompensiert, sondern bei einer Änderung der Störgröße z wird die Stellgröße verändert, noch bevor die Störgröße aufgrund des Übertragungsverhaltens von Gz(s) wirksam ist. Man erhält somit einen "Vorhalt", der eine ähnliche vorteilhafte Wirkung wie ein D-Anteil im Regler hat. Dieser Vorhalt ist in praktischen Fällen vorteilhaft. Zudem hat eine statische Störgrößenaufschaltung den Vorteil, daß man auch eine nichtlineare Wirkung einer Störung besser berücksichtigen kann. Man muß dazu zusammengehörende Kombinationen von Störgrößenwerten und Stellgrößenwerten ermitteln, d. h. welcher Stellgrößenwert y(i) sich für einen bestimmten Störwert z(i) einstellt, wobei die in Klammern hinzugefügte Variable i den Abtastzeitpunkt kennzeichnet.
Wirkt eine Störung auf den Regelkreis, ohne daß eine Störgrößenaufschaltung vorhanden ist, dann kann, wie anfangs erwähnt, der Regler erst verzögert auf die Wirkung der Störung reagieren. Diese Verzögerung kann aber zu einer schlechten Regelgüte führen. Entwirft man nun eine Störgrößenaufschaltung, die bei einer Änderung der Störgröße einen ähnlichen Stellgrößenverlauf erzeugt wie der Regler nach dem Ausregeln der Störung (ohne Störgrößenaufschaltung), dann wirkt sich die vorhaltende Wirkung der Störgrößenaufschaltung vorteilhaft aus. Der Regler muß nun lediglich noch die Störungen ausregeln, die durch die Störgrößenaufschaltung nicht kompensiert werden. Dies bewirkt eine Verbesserung der Regelgüte, d. h., die Dauer und die Amplitude des Einschwingvorganges werden verringert.
Bei der Regelung von Batch-Prozessen hat man oft Einschwingvorgänge, die immer wieder unter ähnlichen Bedingungen erfolgen. Dies ist z. B. das Ausregeln von definierten Störungen, etwa wenn während einer Produktion immer wieder eine bestimmte Menge von Zusatzstoffen zugegeben wird. Diese Fälle sind besonders geeignet, um den Stellgrößenverlauf des Reglers mit der Störgrößenaufschaltung zu unterstützen. Beim Ausregeln der Störung wird vom Einschwingvorgang der zeitliche Verlauf von Störgröße z und Reglerstellgröße y abgespeichert. Es wird dann eine Datei gebildet, bestehend aus den Werten der Störgröße z(i) und der Reglerstellgröße im jeweils nachfolgenden Abtastschritt y(i+1). Mit dieser wird ein Korrekturglied berechnet, das den mathematischen Zusammenhang zwischen der Störgröße z und der Stellgröße y nachbildet, d. h., ist yk der Ausgangswert des Korrekturgliedes Gk(s), dann soll für die verschiedenen Werte z(i) der Störgröße gelten:

$$yk(i)\approx y(i+1) \qquad [22]$$

Diese Nachbildung kann mit verschiedenen Methoden erfolgen:

1. Verwendung eines Ausgleichspolynoms
2. Verwendung eines neuronalen Netzes
3. Verwendung einer Kombination von neuronalem Netz und PTn-Modell.

Als Korrekturglied wird im ersten Fall ein Ausgleichspolynom verwendet

$$y(i+1)= a0 +a1^* z(i) +a2^* z(i)^2 + a3^* z(i)^3 +...+ an^* z(i)^n \qquad [23]$$

Wurden von dem Einschwingvorgang anz Stützwerte abgespeichert, dann werden die Stützwerte in die Gleichung eingesetzt und es wird ein überbestimmtes Gleichungssystem gebildet:

$$y(2)=a0+a1*z(1)+a2*z(1)^2+a3*z(1)^3+...+an*z(1)^n$$

$$y(3)=a0+a1*z(2)+a2*z(2)^2+a3*z(2)^3+...+an*z(2)^n$$

$$y(4)=a0+a1*z(3)+a2*z(3)^2+a3*z(3)^3+...+an*z(3)^n \qquad [24]$$

$$\vdots$$

$$y(anz)=a0+a1*z(anz-1)+a2*z(anz-1)^2+a3*z(anz-1)^3+...+an*z(anz-1)^n$$

Dieses Gleichungssystem kann man in Matrizenschreibweise darstellen:

$$\begin{bmatrix} y(2) \\ y(3) \\ y(4) \\ \vdots \\ y(anz) \end{bmatrix} = \begin{bmatrix} 1 & z(1) & z(1)^2 & z(1)^3 & \dots & z(1)^n \\ 1 & z(2) & z(2)^2 & z(2)^3 & \dots & z(2)^n \\ 1 & z(3) & z(3)^2 & z(3)^3 & \dots & z(3)^n \\ \vdots & & & & & \\ 1 & z(anz-1) & z(anz-1)^2 & z(anz-1)^3 & \dots & z(anz-1)^n \end{bmatrix} * \begin{bmatrix} a0 \\ a1 \\ a2 \\ \vdots \\ an \end{bmatrix} \qquad [25]$$

mit der Kurzschreibweise:

$$\underline{y} = \underline{\underline{Z}} * \underline{a} \qquad [26]$$

Die Lösung für die Parameter $\underline{a}$ lautet:

$$\underline{a} = \left( \underline{\underline{Z}}^T * \underline{\underline{Z}} \right)^{-1} * \underline{\underline{Z}}^T * \underline{y} \qquad [27]$$

Die Kennlinie, die sich anhand dieses Ausgleichspolynoms ergibt, kann man auch in einen konventionellen Kennlinienbaustein übertragen.

Es handelt sich nur um einen statischen Zusammenhang. Die Zeitverzögerung durch den Prozeß wird nicht berücksichtigt. Damit wird durch die Störgrößenaufschaltung ein Vorhalt erreicht.

Das Ermitteln des Stellwertes y erfolgt im Einschwingvorgang des Regelkreises. Die Dauer und die Amplitude des Einschwingvorganges kann stark verringert werden, indem diese Stellwertveränderung direkt über eine Störgrößenaufschaltung eingestellt wird.

Im zweiten Fall wird diese Störgrößenaufschaltung mit einem neuronalen Netz realisiert. Nach Abklingen eines Einschwingvorganges wird aus Sollwert, Störwert und zugehörigem Stellwert des Reglers ein Lerndatensatz gebildet. Bei verschiedenen Arbeitspunkten und Störwerten ergibt sich somit im Laufe der Zeit eine Sammlung von zugehörigen Wertetripeln. Mit diesen Lerndaten kann dann ein neuronales Netz trainiert werden. Das neuronale Netz erhält als Eingangsgrößen die jeweilige Führungsgröße w und die Störgröße z und gibt als Ausgangswert den zugehörigen Stellgrößenanteil yk aus. Bei Änderungen des Sollwertes oder der Störung gibt das Netz somit günstige Stellwerte vor. Der Regler muß nur noch Abweichungen aufgrund von Prozeßdynamik oder nicht berücksichtigten Nichtlinearitäten ausregeln. Mit dem neuronalen Netz wird somit eine statische, arbeitspunktabhängige Störgrößenaufschaltung realisiert. Die mit dem neuronalen Netz gelernte, nichtlineare Übertragungsfunktion kann nach dem Lernvorgang auch in ein herkömmliches Kennlinienglied übertragen werden.

Ein neuronales Netz ist zur Störgrößenaufschaltung beispielsweise auch anwendbar, wenn - wie im dritten Fall - als Prozeßmodell eine Reihenschaltung eines neuronalen Netzes für einen arbeitspunktabhängigen Verstärkungsfaktor und eines PTn-Modells für ein lineares, dynamisches Übertragungsglied in Frage kommt. Das Übertragungsverhalten der Störgrößenaufschaltung Gk entspricht in diesem Fall dem statischen, nichtlinearen Übertragungsverhalten des im Modell verwendeten neuronalen Netzes.

**Patentansprüche**

1.  Verfahren zur Bestimmung einer Störgrößenaufschaltung in einem geschlossenen Regelkreis, bei welcher die Störgröße (z) meßtechnisch erfaßt und über ein Übertragungsglied (Gk) auf einen Ausgang des Reglers (R) aufgeschaltet wird, **dadurch gekennzeichnet**, daß die Reaktion der Stellgröße (y) auf eine Störgrößenänderung ohne Berücksichtigung einer Störgrößenaufschaltung durch ein Modell nachgebildet wird und daß die Störgrößenaufschaltung zumindest näherungsweise derart eingestellt wird, daß sie die in Reaktion auf eine Störgrößenänderung auftretende Änderung der Stellgröße (y) vornimmt, indem die Störgröße (z) über ein dem Modell entsprechendes Übertragungsglied (Gk) auf den Reglerausgang aufgeschaltet wird.

2.  Verfahren nach Anspruch 1, **dadurch gekennzeichnet**, daß der Regler (R) nach dem Betragsoptimum entworfen wird.

3.  Verfahren nach Anspruch 1 oder 2, **dadurch gekennzeichnet**, daß zur Nachbildung der Reaktion der Stellgröße (y) auf eine Störgrößenänderung ohne Berücksichtigung einer Störgrößenaufschaltung ein statisches Modell verwendet wird.

4.  Verfahren nach Anspruch 3, **dadurch gekennzeichnet**, daß aus mehreren Reaktionen der Stellgröße (y) auf verschiedene Störgrößenänderungen ein Datensatz von Wertepaaren (y(i), z(i)) ermittelt wird und daß ein statisches Modell gemäß der Gleichung

$$y(i+1)=a0+a1\,{}^*z(i)+a2\,{}^*z(i)^2+a3\,{}^*z(i)^3+...+an^*z(i)^n$$

verwendet wird, dessen Parameter a0 ... an aus dem Datensatz nach Methoden der Näherungsrechnung berechnet werden.

5.  Verfahren nach Anspruch 3, **dadurch gekennzeichnet**, daß aus mehreren Reaktionen der Stellgröße (y) auf verschiedene Störgrößenänderungen ein Datensatz von Wertepaaren (y(i), z(i)) ermittelt wird und daß als statisches Modell ein neuronales Netz verwendet wird, das den Datensatz lernt.

6.  Verfahren nach Anspruch 3, **dadurch gekennzeichnet**, daß aus mehreren Reaktionen der Stellgröße (y) auf verschiedene Störgrößenänderungen bei verschiedenen Werten der Führungsgröße (w) ein Datensatz von Wertetripeln (w(i), y(i), z(i)) ermittelt wird und daß als statisches Modell ein neuronales Netz verwendet wird, auf das als Eingangsgrößen die Störgröße (z) und die Führungsgröße (w) geführt sind, das diesen Datensatz lernt und als Ausgangsgröße den Stellgrößenanteil (yk) der Störgrößenaufschaltung liefert.

7.  Verfahren nach Anspruch 1 oder 2, **dadurch gekennzeichnet**, daß die Reaktion der Stellgröße (y) auf die Störgröße (z) ohne Berücksichtigung der Störgrößenaufschaltung durch eine Reihenschaltung eines neuronalen Netzes und eines dynamischen Modells nach Art eines PTn-Gliedes als nichtlineares, dynamisches Modell nachgebildet wird, in der das neuronale Netz die nichtlineare, statische Kennlinie beschreibt, und daß die Störgröße (z) über ein dem neuronalen Netz entsprechendes Übertragungsglied (Gk) auf den Reglerausgang aufgeschaltet wird.

8.  Verfahren nach Anspruch 1 oder 2, **dadurch gekennzeichnet**, daß die Reaktion der Stellgröße (y) auf eine Störgrößenänderung ohne Berücksichtigung einer Störgrößenaufschaltung durch ein erstes dynamisches Modell Gid (s) nachgebildet wird, daß die Reaktion der Regelgröße (x) auf eine Führungsgrößenänderung durch ein zweites dynamisches Modell Fw(s) nachgebildet wird und daß die Störgröße (z) über ein drittes dynamisches Übertragungsglied Gk(s) auf den Reglerausgang aufgeschaltet wird, das aus dem ersten dynamischen Modell Gid(s) und dem zweiten dynamischen Modell Fw(s) durch eine Verknüpfung gebildet wird, die im Laplace-Bereich dem Quotienten

$$Gk(s) = \frac{Gid(s)}{Fw(s)}$$

entspricht.

**Claims**

1. Method for determining a feedforward control in a closed control loop, in which method the disturbance variable (z) is determined using measuring techniques and, by way of a transfer element (Gk), applied to an output of the controller (R),
characterised in that the reaction of the manipulated variable (y) to a disturbance-variable alteration without taking a feedforward control into account is simulated by a model, and in that the feedforward control is adjusted at least by approximation in such a way that it carries out the alteration of the manipulated variable (y) that occurs in reaction to a disturbance-variable alteration, by the disturbance variable (z) being applied by way of a transfer element (Gk), which corresponds to the model, to the controller output.

2. Method according to claim 1, characterised in that the controller (R) is designed according to the absolute-value optimum.

3. Method according to claim 1 or 2, characterised in that in order to simulate the reaction of the manipulated variable (y) to a disturbance-variable alteration without taking a feedforward control into account, a static model is used.

4. Method according to claim 3, characterised in that there is determined from a plurality of reactions of the manipulated variable (y) to different disturbance-variable alterations, a data record of pairs of values (y(i), z(i)), and in that a static model in accordance with the equation

$$y(i{+}1)=a0+a1{}^{*}z(i)+a2{}^{*}z(i)^{2}+a3{}^{*}z(i)^{3}+...+an{}^{*}z(i)^{n}$$

is used, the parameters a0 ... an of which are calculated from the data record according to methods of approximate calculation.

5. Method according to claim 3, characterised in that there is determined from a plurality of reactions of the manipulated variable (y) to different disturbance-variable alterations, a data record of pairs of values (y(i), z(i)), and in that a neuronal network which learns the data record is used as a static model.

6. Method according to claim 3, characterised in that there is determined from a plurality of reactions of the manipulated variable (y) to different disturbance-variable alterations in the case of different values of the reference variable (w), a data record of value triplets (w(i), y(i), z(i)), and in that a neuronal network to which the disturbance variable (z) and the reference variable (w) are passed as input variables and which learns this data record and as output variable delivers the manipulated variable portion (yk) to the feedforward control is used as a static model.

7. Method according to claim 1 or 2,
characterised in that the reaction of the manipulated variable (y) to the disturbance variable (z) without taking the feedforward control into account is simulated by a series circuit arrangement of a neuronal network and a dynamic model of a PTn-element type as a non-linear dynamic model, in which the neuronal network describes the non-linear static characteristic curve, and in that the disturbance variable (z) is applied by way of a transfer element (Gk), which corresponds to the neuronal network, to the controller output.

8. Method according to claim 1 or 2,
characterised in that the reaction of the manipulated variable (y) to a disturbance-variable alteration without taking a feedforward control into account is simulated by a first dynamic model Gid(s), in that the reaction of the controlled variable (x) to a reference-variable alteration is simulated by a second dynamic model Fw(s), and in that the disturbance variable (z) is applied by way of a third dynamic transfer element Gk(s) to the controller output, which transfer element is formed from the first dynamic model Gid(s) and the second dynamic model Fw(s) by a logic operation which in the Laplace region corresponds to the quotient:

$$Gk(s)=\frac{Gid(s)}{Fw(s)}$$

**Revendications**

1.  Procédé pour la détermination d'une compensation de perturbation dans une boucle de régulation fermée, la perturbation (z) étant détectée par une technique de mesure et étant appliquée par l'intermédiaire d'un élément de transfert (Gk) à une sortie du régulateur (R), caractérisé par le fait que l'on reproduit la réaction de la grandeur réglante (y) à une variation de perturbation sans tenir compte d'une compensation de perturbation au moyen d'un modèle et que l'on règle la compensation de perturbation au moins approximativement de telle sorte qu'elle prend en compte la variation de la grandeur réglante (y) apparaissant en réaction à une variation de la perturbation en appliquant la perturbation (z) à la sortie de régulateur par l'intermédiaire d'un élément de transfert (Gk) correspondant au modèle.

2.  Procédé selon la revendication 1, caractérisé par le fait que l'on développe le régulateur (R) selon l'optimum en valeur absolue.

3.  Procédé selon la revendication 1 ou 2, caractérisé par le fait que l'on utilise un modèle statique pour la reproduction de la réaction de la grandeur réglante (y) à une variation de perturbation sans prise en compte d'une compensation de perturbation.

4.  Procédé selon la revendication 3, caractérisé par le fait que l'on détermine à partir de plusieurs réactions de la grandeur réglante (y) à différentes variations de perturbation un jeu de données de couples de valeurs (y(i), z(i)) et que,
    l'on utilise un modèle statique selon l'équation

    $$y(i + 1) = a0 + a1 * z(i) + a2 * z(i)^2 + a3 * z(i)^3 + ... + an * z(i)^n$$

    dont les paramètres a0 à an sont calculés à partir du jeu de données selon des méthodes du calcul approché.

5.  Procédé selon la revendication 3, caractérisé par le fait que l'on détermine à partir de plusieurs réactions de la grandeur réglante (y) à différentes variations de perturbation un jeu de données de couples de valeurs (y(i), z(i)), et que
    l'on utilise comme modèle statique un réseau neuronal dont l'apprentissage est basé sur le jeu de données.

6.  Procédé selon la revendication 3, caractérisé par le fait que l'on détermine à partir de plusieurs réactions de la grandeur réglante (y) à différentes variations de perturbation pour différentes valeurs de la grandeur de commande (w) un jeu de données de triplets de valeurs (w(i), y(i), z(i)), et que
    l'on utilise comme modèle statique un réseau neuronal, auquel la perturbation (z) et la grandeur de commande (w) sont envoyées comme grandeurs d'entrée, dont l'apprentissage est basé sur le jeu de données et qui délivre comme grandeur de sortie la composante de grandeur réglante (yk) de la compensation de perturbation.

7.  Procédé selon la revendication 1 ou 2, caractérisé par le fait que l'on reproduit la réaction de la grandeur réglante (y) à la perturbation (z) sans tenir compte de la compensation de perturbation au moyen d'un branchement en série d'un réseau neuronal et d'un modèle dynamique du type d'un élément PTn comme un modèle dynamique non linéaire dans lequel le réseau neuronal décrit la courbe caractéristique statique non linéaire, et que
    l'on applique la perturbation (z) à la sortie de régulateur par l'intermédiaire d'un élément de transfert (Gk) correspondant au réseau neuronal.

8.  Procédé selon la revendication 1 ou 2, caractérisé par le fait que l'on reproduit la réaction de la grandeur réglante (y) à une variation de perturbation sans tenir compte d'une compensation de perturbation au moyen d'un premier modèle dynamique Gid(s),
    on reproduit la réaction de la grandeur réglée (x) à une variation de grandeur de commande au moyen d'un deuxième modèle dynamique Fw(s),.et que
    l'on applique la perturbation (z) à la sortie de régulateur par l'intermédiaire d'un troisième élément de transfert dynamique Gk(s) qui est formé à partir du premier modèle dynamique Gid(s) et du deuxième modèle dynamique Fw(s) au moyen d'une combinaison qui correspond dans le domaine laplacien au quotient :

    $$Gk(s) = \frac{Gid(s)}{Fw(s)} \ .$$

FIG